# EUROPÄISCHE PATENTSCHRIFT

(11) **EP 0 388 955 B1**
(45) Veröffentlichungstag und Bekanntmachung des Hinweises auf die Patenterteilung: **28.06.1995**
(21) Anmeldenummer: 90105438.7
(22) Anmeldetag: 22.03.1990
(51) Int. Cl.: G21C 19/317

(54) **Vorrichtung zur Entfernung von Wasserstoff aus einem Gasgemisch durch Rekombination**
Device for removal of hydrogen from a gas mixture by recombination
Dispositif pour éliminer par recombinaison l'hydrogène d'un mélange de gaz

(30) Priorität: 22.03.1989 DE 3909540
(43) Veröffentlichungstag der Anmeldung: 26.09.1990
(73) Patentinhaber: NIS Ingenieurgesellschaft mbH, D-63452 Hanau (DE)
(72) Erfinder: Lukacs, Gabor, Dipl.-Ing., D-6000 Frankfurt am Main 50 (DE); Seidler, Manfred, Dipl.-Ing., D-6073 Egelsbach (DE)
(74) Vertreter: Strasse, Joachim, Dipl.-Ing.

(56) Entgegenhaltungen:
- EP-A- 0 303 144
- DE-B- 1 245 336
- NUCLEAR ENGINEERING INTERNATIONAL, Band 18, Nr. 208, September 1973, Seiten 711-715; W.M. ROGERS et al.: "Catalytic recombiners for boiling water reactors"

## Beschreibung

Die Erfindung betrifft eine Vorrichtung zur Entfernung von Wasserstoff aus einem Gasgemisch durch Rekombination an einem auf einem Träger aufgebrachten Katalysator, insbesondere für Kernreaktor-Sicherheitseinrichtungen, wobei der Katalysatorträger ein sehr großes Oberflächen/Volumen-Verhältnis aufweist.

Im hypothetischen Störfallszenario kann durch Reaktion von Zirkonium aus der Kernschmelze mit Wasser beziehungsweise aus der Wechselwirkung von Kernschmelze und Beton Wasserstoff freigesetzt werden. Kann das Ansteigen der H₂-Konzentration großräumig nicht verhindert werden, besteht die Gefahr, daß durch eine Knallgasdetonation der Reaktorsicherheitsbehälter versagt.

Um das Entstehen detonationsfähiger Gemische zu verhindern, sind Vorschläge unterbreitet worden, eine katalytische Rekombination von Wasserstoff und Sauerstoff zu H₂O an beispielsweise Platin oder Palladium durchzuführen und damit den Aufbau kritischer Konzentrationen zu verhindern.

So ist aus der DE-A- 36 04 416 zur Beseitigung von Wasserstoff aus einem wasserstoffhaltigen Gasgemisch bekannt, innerhalb eines verschließbaren Behälters Folien zu befestigen, deren Material die Wasserstoffbeseitigung bewirkt, indem der Wasserstoff aus dem Gasgemisch durch Absorption im Material entfernt oder in Anwesenheit von Sauerstoff im Gasgemisch oxidiert wird, wobei das Material die Oxidation katalytisch beeinflußt. Um die Folien bei Bedarf zum Einsatz zu bringen, ist im Behälter ein mit Folien versehener Trägerkörper derart angeordnet, daß sich die Folien nach Öffnen des Behälters in die Umgebung erstrecken.

Aus der DE-A- 37 25 290 ist eine Sicherheitseinrichtung zur katalytischen Oxidation von Wasserstoff in einer Wasserstoff und Sauerstoff enthaltenden Atmosphäre mit einer Palladium-Legierung bekannt, wobei in einer gasdicht geschlossenen Katalysatorkammer ein mit der Palladium-Legierung beschichtetes Trägerblech eingesetzt ist und wobei sich die Katalysatorkammer bei Anwesenheit von Wasserstoff in der die Kammer umgebenden, Sauerstoff enthaltenden Gasatmosphäre öffnet und damit die Palladium-Legierung mit der Atmosphäre in Kontakt bringt.

Bei diesen Blechen oder Folien ist es jedoch zwingend notwendig, sie in Richtung der Luftströmung auszurichten. Außerdem haben sie einen großen Flächenbedarf, dem nur mit mechanischen Hilfsmitteln Rechnung getragen werden kann. Die zusammengelegten Folien müssen beispielsweise automatisch auseinandergeklappt werden.

Nun ist bekannt, daß für einen normalen Reaktorbereich zur katalytischen Rekombination von Wasserstoff eine wirksame Katalysatoroberfläche zwischen 5000 m² und 10 000 m² benötigt wird. Nach Schätzungen liegt die Diffusionsgeschwindigkeit von Wasserstoff im Bereich von weniger als 1 cm/s, so daß, um in allen Bereichen einen Abbau von H₂ erreichen zu können, eine entsprechende räumliche Verteilung von Katalysatoroberfläche über den gesamten Sicherheitsbereich erforderlich ist.

Andere Einrichtungen zur Wasserstoff-Rekombination, teilweise auch für Kernreaktoranlagen, sind bekannt aus der JP-A2 61-19 74 04, aus der US-A-4 119 706, der EP-A- 0 303 144, DE-C- 820 134, DE-A- 30 13 753, DE-A- 33 39 242, DE-C- 29 22 717, DE-A- 32 01 789, DE-A- 36 14 267, DE-C- 30 04 677, DE-A- 22 26 697, DE-A- 37 25 290 und DE-A- 28 44 294.

Der Erfindung liegt die Aufgabe zugrunde, eine Vorrichtung zur Entfernung von Wasserstoff durch katalytische Rekombination aus einem wasserstoffhaltigen Gasgemisch anzugeben, die es gestattet, auf einfache Weise eine für den gesamten Sicherheitsbereich eines Reaktors hinreichend große katalytisch wirksame gesamte Oberfläche vorzusehen, keiner störanfälligen Hilfsmittel bedarf, um diese gesamte Oberfläche zum Einsatz zu bringen, weiterhin im Störfall gegen Trümmerflug beständig ist und selbst bei teilweiser Beschädigung im wesentlichen noch voll wirksam ist.

Diese Aufgabe wird durch eine Vorrichtung gemäß der unabhängigen Ansprüche 1 und 4 voll zufriedenstellend gelöst. Vorteilhalfte Ausgestaltungen einer derartigen Vorrichtung sind Gegenstand der Unteransprüche.

Der Katalysator besteht vorzugsweise aus Platin oder Palladium. Das Trägermaterial ist thermisch und mechanisch so stabil, daß es Störfallbedingungen und Rekombinationswärme aushält. Auch bei Trümmerflug versagt es nicht. Geeignete Materialien, die diesen Anforderungen genügen, sind beispielsweise Edelstahl, Keramik, Aluminium und Quarz.

Die freigesetzte Wärme darf nicht dazu führen, daß wesentliche Teile des Trägermaterials schmelzen und damit der aufgebrachte Katalysator unwirksam wird. Aus diesen Gründen ist das mit Katalysator beschichtete Trägermaterial vorzugsweise ein Netz, ein Gewebe oder ein vlies- oder watteartiges Material. Solch ein Trägermaterial bietet einen sehr geringen Strömungswiderstand.

Alternativ kann das beschichtete Trägermaterial parallel zu senkrechten Strömungskanälen angeordnet sein, beispielsweise in einer Wabenstruktur, wie sie aus Automobil-Abgaskatalysatoren bereits bekannt ist. Diese Anordnung nutzt die Diffusionsbewegung im Strömungskanal als Mechanismus zur Zuführung von O₂ und H₂ an die katalytische wirksame Oberfläche.

Wichtig ist, daß die notwendige Katalysatoroberfläche im gesamten Sicherheitsbereich des Reaktorsicherheitsbehälters verteilt vorgesehen werden kann, was vorzugsweise durch überall leicht montierbare einzelne Elemente geschieht. Größere Räume mit durch das größere Raumvolumen auch größeren Energiepotentialen bei entsprechenden H₂-Freisetzungen sollten durch Montage entsprechend vieler Elemente redundant ausgestattet werden.

Um die Zahl der Elemente andererseits nicht zu groß werden zu lassen, sollte jedes Element eine wirksame Katalysatorfläche von mindestens 20 Quadratmetern haben und/oder durch die Geschwindig-keit der durch die Reaktionswärme erzeugten Konvektionsströmung und durch hohen Wirkungsgrad eine entsprechend schnelle Rekombi-nation des freigesetzten H₂ bewirken.

Als besonders vorteilhaft erweist sich eine Größe der einzelnen Elemente von circa 1 m x 1 m bei einer Dicke von vorzugsweise 5 cm bis 50 cm, insbesondere 5 cm bis 10 cm. Dann ist die Baugröße so kompakt, daß die Elemente in allen Raumbereichen innerhalb der Reaktoranlage installiert werden können.

Weiterhin sind solche Elemente auch gegen Trümmerflug unempfindlich auslegbar, so daß große Teile des Katalysatormaterials unter Beibehaltung ihrer Funktionsweise in der Konstruktion verbleiben, selbst wenn das Element beschädigt wird. Bei Verwendung der vorstehend erläuterten Elemente werden für eine Reaktoranlage je nach Auslegung 20 bis 200 Elemente erforderlich sein. Die Elemente können beispielsweise horizontal von Raumdecken oder anderen Strukturen abgehängt werden, so daß sie den Betrieb nicht stören.

Es versteht sich, daß der Katalysator fest auf dem Trägermaterial haften sollte. Er kann durch verschiedene bekannte Verfahren wie zum Beispiel durch Aufdampfen, Sputtern, auf galvanischem Wege oder dergleichen aufgebracht werden. Die Wahl des Verfahrens hängt von der Wirksamkeit der sich ausbildenden Oberfläche, der Einhaltung der Katalysatorzusammensetzung und den Randbedingungen ab, die sich durch die verschiedenen Trägermaterialien und deren Geometrien ergeben (zum Beispiel in der Tiefe von Geweben).

Beim Einsatz in Bereichen mit hoher potentieller H₂-Freisetzungsrate ist es angeraten, in den Elementen katalytische Zünder vorzusehen oder zu gewährleisten, daß sich der Katalysator bei Anstieg der Wasserstoffkonzentration auf mehr als 4 % so stark erhitzt, daß sich zündfähige Gemische mit hohen Raten in einer Deflagration abbauen können, ohne daß Wasserstoffkonzentrationen von mehr als 10 % erreicht werden. Es empfiehlt sich, die Katalysatoren so auszulegen, daß durch die Rekombination rasch hohe Temperaturen erreicht werden. Dabei sollten bei H₂-Konzentrationen von circa 4 %-Vol. Temperaturanstiege um circa 500° C erreicht werden. So ist einerseits ein schnelles Ansprechverhalten gegeben, andererseits werden durch das Aufheizen des Katalysators und durch hohe Konvektion hohe Rekombinationsraten erreicht. Schließlich kann bei Erreichen der Zündgrenze der heiße Katalysator auch als Zünder dienen und damit bei hohen Freisetzungsraten für schnelleren Abbau sorgen.

Durch die Verwendung der erfindungsgemäßen Elemente ist es nicht mehr erforderlich, daß eine Ausrichtung auf eine bestimmte Strömungsrichtung erfolgen muß. Vielmehr kann jede Richtung gewählt werden, da durch das Material eine hinreichende Wärmeabführung erfolgt. Die bei der stattfindenden kalten Verbrennung erzeugte Wärme führt des weiteren zu einem Auftrieb, durch den Wasserstoff an die Katalysatorflächen herangeführt wird. Es entsteht folglich eine Kaminwirkung.

Gegebenenfalls muß darauf geachtet werden, daß die Materialien selbst in hinreichendem Umfang gekühlt werden, damit bei der kalten Verbrennung von Wasserstoff und Sauerstoff keine Zerstörung erfolgt.

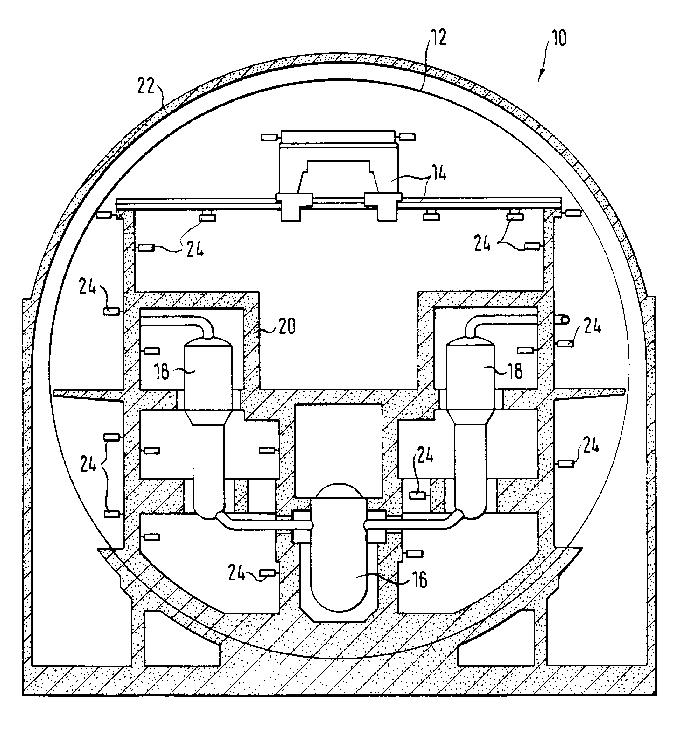

Im folgenden wird ein Ausführungsbeispiel der Erfindung anhand der beigefügten Zeichnung näher erläutert, die schematisch einen Vertikalschnitt durch eine Kernreaktoranlage zeigt.

Eine Kernreaktoranlage 10 umfaßt einen Sicherheitsbehälter 12 innerhalb einer Betonhülle 22. Im oberen Bereich innerhalb des Sicherheitsbehälters 12 ist eine Kranbahn 14 vorgesehen. Daneben umfaßt der Sicherheitsbehälter 12 in üblicher Weise einen Druckbehälter 16 und mit diesem verbundenen Dampferzeuger 18, daneben Abschirmungs- und Tragstrukturen 20, überwiegend aus Beton.

An diesen Strukturen 20 sowie an der Kranbahn 14 sind im Ausführungsbeispiel die erfindungsgemäßen Elemente 24 in im wesentlichen horizontaler Ausrichtung befestigt. Diese Befestigung kann durch Abhängeeinrichtungen erfolgen, um die Elemente 24 beispielsweise von der Kranbahn oder von Deckenstrukturen und dergleichen abhängen zu können. Es ist andererseits natürlich auch möglich, die Elemente an Wände und dergleichen anzudübeln. Die Elemente 24 lassen sich auf diese Art so über den gesamten Raum der Reaktoranlage 10 verteilen, daß die benötigte wirksame Katalysatoroberfläche überall zur Verfügung steht, wo gefährliche Konzentrationen wasserstoffhaltigen Gases auftreten könnten.

Die Elemente 24 bestehen vorzugsweise aus einem Rahmen, in dem ein Filamentgewirk oder -gewirr als Trägermaterial eingespannt ist. Hierfür kommen hauptsächlich gewebe- oder fließartige bis watteförmige Trägermaterialien in Frage. Diese werden selbst bei Beschädigung durch Trümmerflug zwar zerrissen, doch bleibt ihr Zusammenhang im wesentlichen erhalten, so daß die Rekombinationswirkung bestehen bleibt.

Insbesondere dort, wo weniger mit Trümmerflug zu rechnen ist, werden Elemente 24 eingesetzt, die auf einem Siebblech oder dergleichen liegende bzw. in einer Taschenanordnung aufgenommene schüttfähige Trägermaterialien aufweisen. Hierfür eignet sich besonders keramisches Schüttgut, beispielsweise Al₂O₃-Keramik.

Die einzelnen Elemente 24 sind in der Figur nicht exakt maßstabsgerecht gezeigt. Ihre Außenabmessungen betragen im Ausführungsbeispiel circa 1 m x 1 m x 10 cm. Bei der gezeigten horizontalen Anordnung der Elemente 24 ergibt sich so eine große, dem Gasdurchstrom ausgesetzte Oberfläche, ohne daß die Konvektion des H₂-haltigen Gases durch die Elemente 24 durch übermäßige Dicke behindert würde.

Es versteht sich, daß sowohl hinsichtlich der Anordnung der Elemente 24 als auch deren Ausbildung im Detail große Variationsmöglichkeiten bestehen, die eine Anpassung der Vorrichtung an die jeweiligen baulichen und Betriebsbedingungen gestatten.

## Patentansprüche

1. Vorrichtung zur Entfernung von Wasserstoff aus einem Gasgemisch durch Rekombination an einem auf einem Träger aufgebrachten Katalysator, insbesondere für Kernreaktor-Sicherheitseinrichtungen (12), wobei der Katalysatorträger ein sehr großes Oberflächen/Volumen-Verhältnis aufweist,
**dadurch gekennzeichnet,**
daß die Vorrichtung eine Vielzahl von Elementen (24) aufweist, deren Dicke in Abstimmung auf das gewählte Trägermaterial bei Erwärmung eine hochgradige Konvektion von Gas durch sie ermöglicht und etwa 5 cm bis 50 cm beträgt, wobei das Trägermaterial Schüttgut ist und die Elemente (24) jeweils so ausgebildet sind, daß das aus Träger und darauf abgeschiedenen, hydrophoben Katalysator bestehende Material in eine Stützstruktur eingelegt ist, wobei die Stützstruktur eine Anordnung von Taschen zur Aufnahme des Trägermaterials umfaßt und jedes Element (24) eine Katalysatoroberfläche von mindestens 20 m² aufweist.

2. Vorrichtung nach Anspruch 1,
**dadurch gekennzeichnet**,
daß das Trägermaterial ein keramisches Schüttgut, insbesondere aus Al₂O₃-Keramik, umfaßt.

3. Vorrichtung nach Anspruch 1 oder 2,
**dadurch gekennzeichnet**,
daß die Stützstruktur ein Siebblech umfaßt.

4. Vorrichtung zur Entfernung von Wasserstoff aus einem Gasgemisch durch Rekombination an einem auf einem Träger aufgebrachten Katalysator, insbesondere für Kernreaktor-Sicherheitseinrichtungen (12), wobei der Katalysatorträger ein sehr großes Oberflächen/Volumen-Verhältnis aufweist,
**dadurch gekennzeichnet**,
daß die Vorrichtung eine Vielzahl von Elementen (24) aufweist, deren Dicke in Abstimmung auf das gewählte Trägermaterial bei Erwärmung eine hochgradige Konvektion von Gas durch sie ermöglicht und etwa 5 cm bis 50 cm beträgt, wobei die Elemente (24) jeweils so ausgebildet sind, daß das aus Träger und darauf abgeschiedenen, hydrophoben Katalysator bestehende Material in einem Rahmen befestigt, insbesondere eingespannt ist, wobei jedes Element (24) eine Katalysatoroberfläche von mindestens 20 m² aufweist.

5. Vorrichtung nach Anspruch 4,
**dadurch gekennzeichnet**,
daß das Trägermaterial ein Gewebe- oder Netzmaterial und/oder ein nichtgewobenes vlies- oder watteartiges Material umfaßt.

6. Vorrichtung nach Anspruch 4,
**dadurch gekennzeichnet**,
daß das Trägermaterial als Wabenkörper ausgebildet ist.

7. Vorrichtung nach einem der vorhergehenden Ansprüche,
**dadurch gekennzeichnet**,
daß das Trägermaterial monolithisch aufgebaut und mit regelmäßigen oder unregelmäßigen Strömungskanälen versehen ist.

8. Vorrichtung nach einem der vorhergehenden Ansprüche,
**dadurch gekennzeichnet**,
daß das Trägermaterial aus Edelstahl, Keramik, Aluminium und/oder Quarz besteht.

9. Vorrichtung nach einem der vorhergehenden Ansprüche,
**dadurch gekennzeichnet**,
daß jedes Element (24) eine große innere Katalysatoroberfläche aufweist.

10. Vorrichtung nach einem der vorhergehenden Ansprüche,
**dadurch gekennzeichnet**,
daß jedes Element (24) eine leicht handhabbare Größe, insbesondere von der Größenordnung 1 m x 1 m, aufweist.

11. Vorrichtung nach einem der vorhergehenden Ansprüche,
**dadurch gekennzeichnet**,
daß jedes Element (24) der Vorrichtung mit Mitteln zu seiner Anbringung an Inneneinbauten in einem Reaktor-Sicherheitsbehälter (12) versehen ist.

12. Vorrichtung nach Anspruch 11,
**dadurch gekennzeichnet**,
daß das Element (24) in im wesentlichen horizontaler Ausrichtung anbringbar ist.

## Claims

1. A device for removing hydrogen from a gas mixture by recombination with a catalyst deposited on a carrier, in particular for nuclear reactor security systems (12), said catalyst carrier having a very large surface/volume ratio, **characterized in** that the device includes a plurality of elements (24), the thickness of which - when adapted to the carrier material selected - makes possible an extensive convection of gas through them when heated and is approx. 5 cm to 50 cm, said carrier material being bulk material, each of said elements (24) being formed such that the material consisting of carrier and hydrophobic catalyst deposited thereon is embedded in a supporting structure, said supporting structure comprising an array of bags for containing the carrier material and each element (24) having a catalyst surface of at least 20 m².

2. The device of claim 1, **characterized in** that the carrier material is ceramic bulk material, in particular of Al₂O₃ ceramic.

3. The device of claim 1 or 2, **characterized in** that the supporting structure comprises a sieve plate.

4. A device for removing hydrogen from a gas mixture by recombination with a catalyst deposited on a carrier, in particular for nuclear reactor security systems (12), said catalyst carrier having a very large surface/volume ratio, **characterized in** that the device includes a plurality of elements (24), the thickness of which - when adapted to the carrier material selected - makes possible an extensive convection of gas through them when heated and is approx. 5 cm to 50 cm, each of said elements (24) being formed such that the material consisting of carrier and hydrophobic catalyst deposited thereon is mounted in, in particular fitted into, a frame, and each element (24) having a catalyst surface of at least 20 m².

5. The device of claim 4, **characterized in** that the carrier material comprises a tissue or netting material and/or a non-woven fleece-like or cotton wool-like material.

6. The device of claim 4, **characterized in** that the carrier material is formed as a honeycomb body.

7. The device of one of the preceding claims, **characterized in** that the carrier material is monolithic in structure and provided with regular or irregular flow channels.

8. The device of one of the preceding claims, **characterized in** that said carrier material consists of stainless steel, ceramic, aluminium and/or quartz.

9. The device of one of the preceding claims, **characterized in** that each element (24) has a large interior catalyst surface.

10. The device of on of the preceding claims, **characterized in** that each element (24) is of an easily handable size, in particular of the order of 1 m x 1 m.

11. The device of one of the preceding claims, **characterized in** that each element (24) of the device is provided with means for mounting it to interior fittings in a reactor security container (12).

12. The device of claim 11, **characterized in** that said element (24) can be mounted in a substantially horizontal orientation.

## Revendications

1. Dispositif pour éliminer l'hydrogène d'un mélange de gaz, par recombinaison sur un catalyseur déposé sur un support, en particulier pour des installations de sécurité (12) de réacteur nucléaire, dispositif dans le cas duquel le support de catalyseur présente un très grand rapport surface/volume, caractérisé en ce que le dispositif présente une multiplicité d'éléments (24) dont l'épaisseur, fonction du matériau support choisi, permet, dans le cas d'un échauffement, une convection de degré élevé du gaz au travers d'elle, et présente une valeur d'environ 5 à 50 cm, étant entendu que le matériau support est un produit en vrac et que les éléments (24) sont chacun réalisés de telle façon que le matériau constitué du support et du catalyseur hydrophobe déposé sur lui est pris dans une structure de protection, cette structure de protection comportant une disposition de poches destinées à recevoir le matériau support et chaque élément (24) présentant une surface externe de catalyseur d'au moins 20 mètres carrés.

2. Dispositif suivant la revendication 1, caractérisé en ce que le matériau support est constitué d'un produit céramique en vrac, en particulier une céramique d'Al₂O₃.

3. Dispositif suivant la revendication 1 ou la revendication 2, caractérisé en ce que la structure de protection est constituée d'une tôle de crible.

4. Dispositif pour éliminer l'hydrogène d'un mélange de gaz, par recombinaison sur un catalyseur déposé sur un support, en particulier pour des installations de sécurité (12) de réacteur nucléaire, dispositif dans le cas duquel le support de catalyseur présente un très grand rapport surface/volume, caractérisé en ce que le dispositif présente une multiplicité d'éléments (24) dont l'épaisseur, fonction du matériau support choisi, permet, dans le cas d'un échauffement, une convection de degré élevé du gaz au travers d'elle et présente une valeur d'environ 5 à 50 cm, étant entendu que les éléments (24) sont chacun réalisés de telle façon que le matériau constitué du support et du catalyseur hydrophobe déposé sur lui est fixé, en particulier est enserré, dans un cadre, chaque élément (24) présentant une surface externe de catalyseur d'au moins 20 mètres carrés.

5. Dispositif suivant la revendication 4, caractérisé en ce que le matériau support comporte un matériau tissé ou en réseau et/ou un matériau non tissé ou du genre ouate.

6. Dispositif suivant la revendication 4, caractérisé en ce que le matériau support est réalisé sous la forme d'un corps en nid d'abeille.

7. Dispositif suivant l'une des revendications précédentes, caractérisé en ce que le matériau support est construit de façon monolithique et est muni de canaux d'écoulement réguliers ou irréguliers.

8. Dispositif suivant l'une des revendications précédentes, caractérisé en ce que le matériau support est constitué d'acier inoxydable, de céramique, d'aluminium et/ou de quartz.

9. Dispositif suivant l'une quelconque des revendications précédentes, caractérisé en ce que chaque élément (24) présente une grande surface intérieure de catalyseur.

10. Dispositif suivant l'une des revendications précédentes, caractérisé en ce que chaque élément (24) présente une grandeur facilement manipulable, en particulier de l'ordre de grandeur de 1m x 1m.

11. Dispositif suivant l'une des revendications précédentes, caractérisé en ce que chaque élément (24) du dispositif est équipé de moyens pour sa mise en place sur des supports intérieurs dans un conteneur de sécurité de réacteur.

12. Dispositif suivant la revendication 11, caractérisé en ce que l'élément (24) peut être mis en place dans une disposition essentiellement horizontale.
